# EUROPEAN PATENT APPLICATION

(11) **EP 1 731 717 A2**
(43) Date of publication of application: **13.12.2006**
(21) Application number: 06252915.1
(22) Date of filing: 06.06.2006
(51) Int. Cl.: F01D 11/00, F01D 5/08, F01D 5/30, F02C 7/28

(54) **Seal assembly for sealing space between stator and rotor in a gas turbine**

(30) Priority: 07.06.2005 US 146798
(71) Applicant: UNITED TECHNOLOGIES CORPORATION, Hartford, CT 06101 (US)
(72) Inventor: Alvanos, Ioannis, Massachusetts 01107 (US); Agrawal, Rajendra, CT 06074 (US); Virtue, John P. Jr., Middletown, CT 06457 (US); Hill, James D., Tolland, CT 06457 (US); Pinero, Hector M., Middletown, CT 06457 (US); Johnson, Erika, Manchester, CT 06040 (US)
(74) Representative: Leckey, David Herbert

(57) **Abstract**

Disclosed are assemblies and articles for restricting leakage of a pressurized fluid from a cavity (50). In accordance with an embodiment of the invention, a vane support (52) defines at least one land (84), and an interrupted rim region (110) of a bladed rotor assembly (54) defines at least one segmented ring (86). The at least one segmented ring (86) protruding outward from the bladed rotor assembly (54) in the interrupted rim region (110), spans across the cavity (50) and cooperates with the at least one land (84) to define a seal.

## Description

### BACKGROUND OF THE INVENTION

### (1) FIELD OF THE INVENTION

The invention relates to gas turbine engines, and more specifically to a seal for providing a fluid leakage restriction between components within such engines.

### (2) DESCRIPTION OF THE RELATED ART

Gas turbine engines operate by burning a combustible fuel-air mixture in a combustor and converting the energy of combustion into a propulsive force. Combustion gases are directed axially rearward from the combustor through an annular duct, interacting with a plurality of turbine blade stages disposed within the duct. The blades transfer the combustion gas energy to one or more blades mounted on disks, rotationally disposed about a central, longitudinal axis of the engine. In a typical turbine rotor assembly, there are multiple, alternating stages of stationary vanes and rotating blades disposed in the annular duct.

Since the combustion gas temperature may reach 2000 degrees Fahrenheit (1093°C) or more, some blade and vane stages are cooled with a lower temperature cooling air for improved durability. Air for cooling the first-stage blades bypasses the combustor and is directed to an inner diameter cavity located between a first-stage vane support and a first-stage rotor assembly. The rotational force of the rotor assembly pumps the cooling air radially outward and into a series of conduits within each blade, thus providing the required cooling.

Since the outboard radius of the inner cavity is adjacent to the annular duct carrying the combustion gasses, it must be sealed to prevent leakage of the pressurized cooling air into the combustion gas stream. This area of the inner cavity is particularly challenging to seal due to the differences in thermal and centrifugal growth between the stationary, first-stage vane support and the rotating, first stage rotor assembly. In the past, designers have attempted to seal the outboard radius of inner cavities with varying degrees of success.

An example of such an outboard radius seal is a labyrinth seal. In a typical configuration, a multi-step labyrinth seal separates the inner cavity into two regions of approximately equal size, an inner region and an outer region. Cooling air in the inner region is pumped between the rotating disk and labyrinth seal into the hollow conduits of the blades while the outer region communicates with the annular duct carrying the combustion gases. A labyrinth seal's lands must be pre-grooved to prevent interference between the knife-edge teeth and the lands during a maximum radial excursion of the rotor. By designing the labyrinth seal for the maximum radial excursion of the rotor assembly, the leakage restriction capability is reduced during low to intermediate radial excursions of the rotor assembly. Any cooling air that leaks by the labyrinth seal is pumped through the outer region and into the annular duct by the rotating disk. This centrifugal pumping action increases the temperature of the disk in the area of the blades and creates parasitic drag, which reduces overall turbine efficiency. The rotating knife-edges also add additional rotational mass to the gas turbine engine, which further reduces engine efficiency.

Another example of such an outboard radius seal is a brush seal. As this example illustrates, a brush seal separates the inner cavity into two regions, an inner region and a smaller, outer region. A freestanding sideplate assembly defines a disk cavity, which is in fluid communication with the inner region. Cooling air in the inner region enters the disk cavity and is pumped between the rotating sideplate and disk to the hollow conduits of the blades. The seal's bristle to land contact pressure increases during the maximum radial excursions of the rotor and may cause the bristles to deflect and 'set' over time, reducing the leakage restriction capability during low to intermediate rotor excursions. Any cooling air that leaks by the brush seal is pumped into the outer region by the rotating disk. This centrifugal pumping action increases the temperature of the disk in the area of the blades and creates parasitic drag, which reduces overall turbine efficiency. The freestanding sideplate and minidisk also adds rotational mass to the gas turbine engine, which further reduces engine efficiency.

Although each of the above mentioned seal configurations restrict leakage of cooling air under certain engine operating conditions, a consistent leakage restriction is not maintained throughout all the radial excursions of the rotor. The seals may also increase the temperature of the disk and cooling air due to centrifugal pumping, reduce engine efficiency due to parasitic drag and add additional engine weight. What is needed is a seal that maintains a more consistent leakage restriction throughout all the radial excursions of the rotor, without negatively affecting disk and cooling air temperature, engine efficiency or engine weight.

### BRIEF SUMMARY OF THE INVENTION

In accordance with an embodiment of the present invention, there is provided a seal for restricting leakage of pressurized cooling air from an inner cavity flanked by a vane support and a bladed rotor assembly. The seal comprises a segmented ring defined by the bladed rotor assembly and a land defined by the vane support. The bladed rotor assembly includes a disk rotationally disposed about a central axis of the engine. The disk includes a radially outermost rim and a plurality of slots circumferentially spaced about the rim for accepting an equal plurality of blades. An interrupted rim region extends radially outward from a radius circumscribing a radially innermost floor of each slot to the outermost rim. The segmented ring extends from the interrupted rim region to define a segregated inner and outer cavity. The circumferential land is located radially above the inner cavity, proximate to the segmented ring. The segmented ring spans across the inner cavity, interacting with the land to define the seal.

By locating the seal radially outboard and in the interrupted rim region of the disk, temperature rise and parasitic drag due to duct placement and centrifugal pumping are minimized. Also, engine rotating mass is reduced with the elimination of freestanding sideplates and complex, multi-step labyrinth seal hardware as well.

Other features and advantages will be apparent from the following more detailed descriptions, taken in conjunction with the accompanying drawings, which illustrate by way of an example a seal in accordance with specific embodiments of the invention.

### BRIEF DESCRIPTION OF THE SEVERAL VIEWS OF THE DRAWINGS

FIG. 1 illustrates a simplified schematic sectional view of a gas turbine engine along a central, longitudinal axis.
FIG. 2 illustrates a partial sectional view of a turbine rotor assembly of the type used in the engine of FIG. 1, showing a seal in accordance with an embodiment of the present invention.
FIG. 3 illustrates a partial sectional view of a turbine rotor assembly of the type used in the engine of FIG. 1, showing a multiple step seal in accordance with an embodiment of the present invention.
FIG. 4 illustrates a partial isometric view of the turbine rotor assembly of the present invention of FIG 2.
FIG. 5 illustrates a partial front view of the turbine rotor assembly of the present invention of FIG. 2.
FIGS. 6a-6h illustrate a series of enlarged schematics illustrating various seals of FIGS. 2 and 3 in accordance with several embodiments of the present invention.

### DETAILED DESCRIPTION OF THE INVENTION

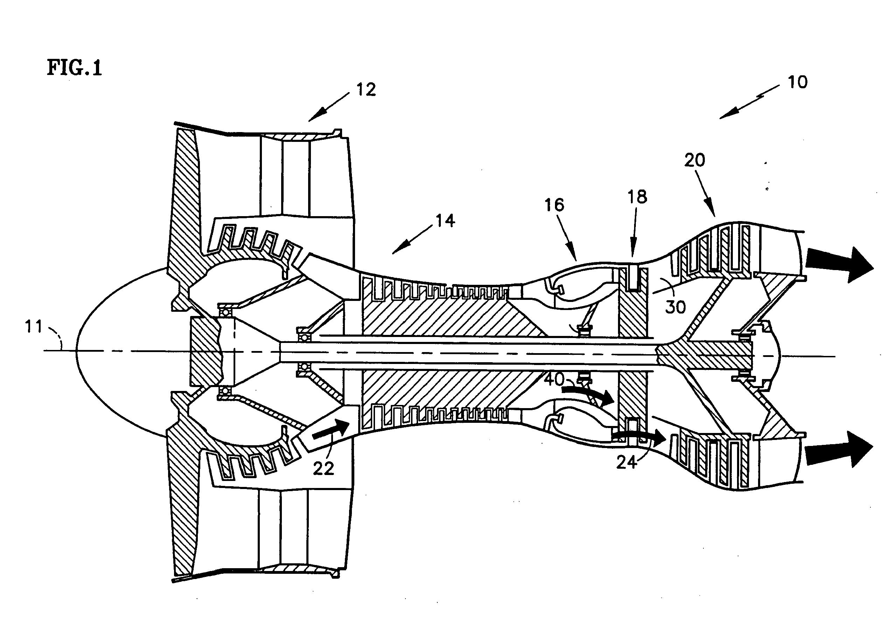

The major sections of a typical gas turbine engine 10 of FIG. 1 include in series, from front to rear and disposed about a central longitudinal axis 11, a low-pressure compressor 12, a high-pressure compressor 14, a combustor 16, a high-pressure turbine 18 and a low-pressure turbine 20. A working fluid 22 is directed rearward through the compressors 12, 14 and into the combustor 16, where fuel is injected and the mixture is burned. Hot combustion gases 24 exit the combustor 16 and expand within an annular duct 30 through the turbines 18, 20 and exit the engine 10 as a propulsive thrust. A portion of the working fluid 22 exiting the high-pressure compressor 14, bypasses the combustor 16 and is directed to the high-pressure turbine 18 for use as cooling air 40.

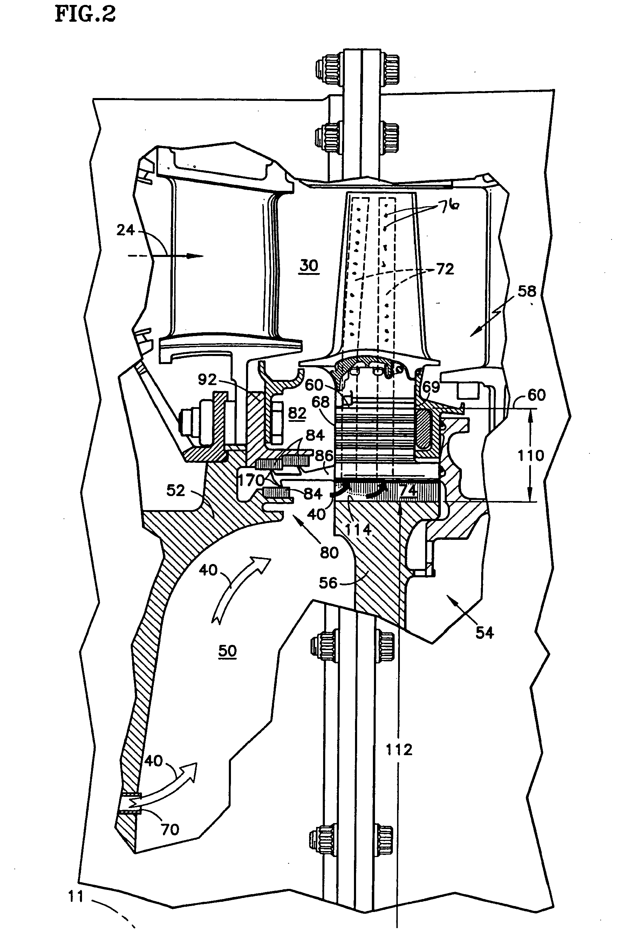

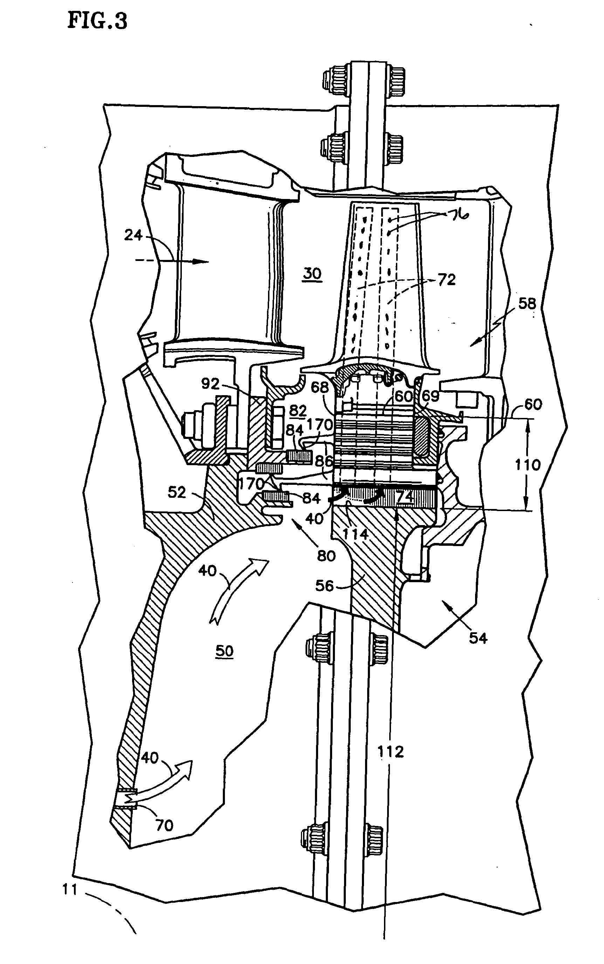

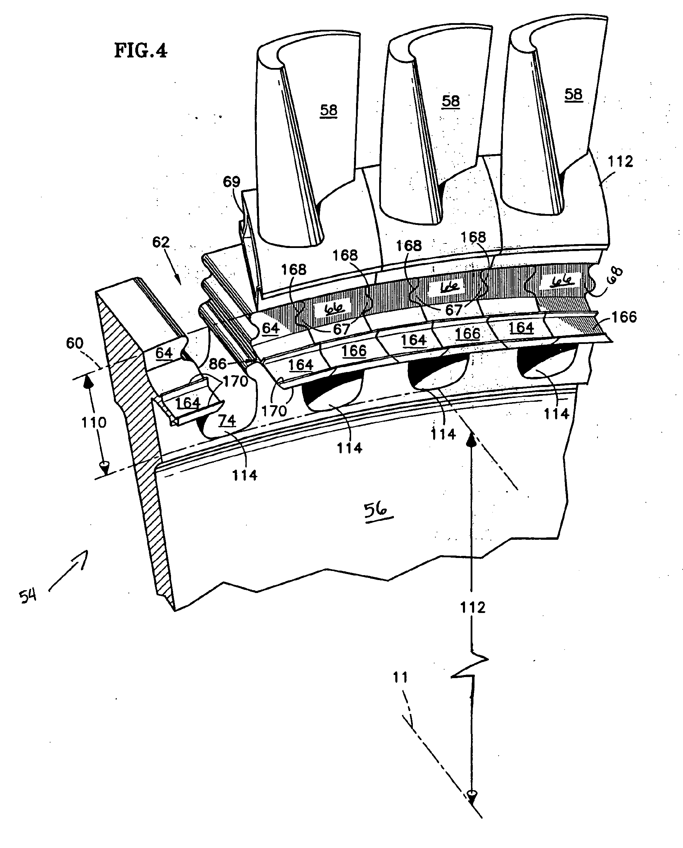

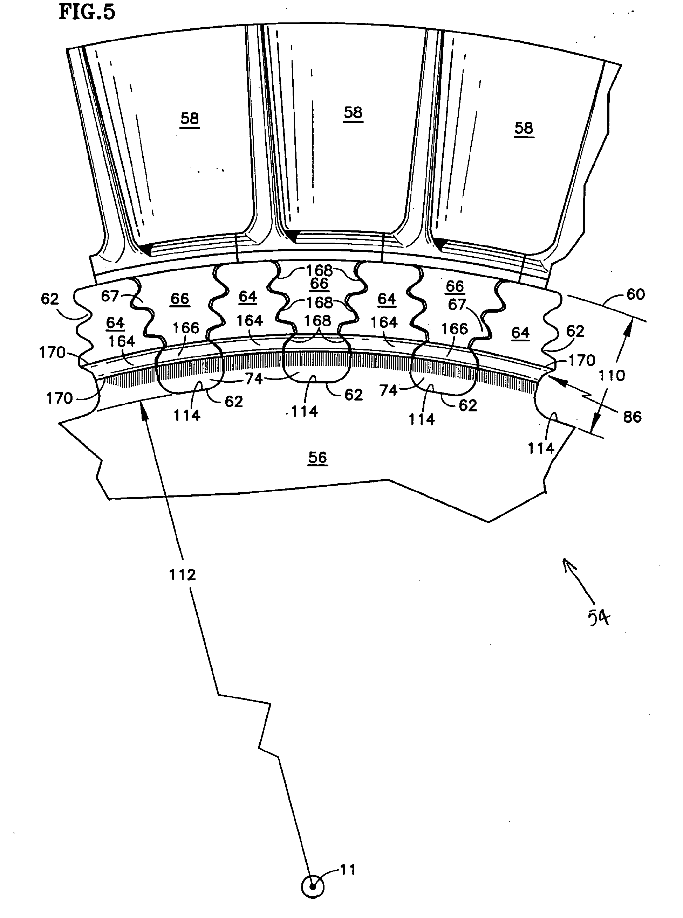

Referring now to FIGS. 2 and 3, an inner cavity 50 is located radially inward of the annular duct 30 and axially between a first-stage vane support 52 and a first-stage rotor assembly 54. The rotor assembly comprises a disk 56 and a plurality of outwardly extending blades 58, rotationally disposed about the central axis 11. As best shown in FIGS 4 and 5, the disk 56 includes a radially outermost rim 60, a plurality of fir tree profiled slots 62 and a plurality of lugs 64 alternating with the slots 62 about the circumference of the rim 60. Each slot 62 accepts a radially inner most attachment 66 of a blade 58 in a sliding arrangement. One or more teeth 67 extend between a forward, axial face 68 and a rearward, axial face 69 of the attachment 66, engaging adjacent lugs 64 to prevent loss of the blade 58 as the disk 56 rotates. The one or more teeth 67, project a complementary fir tree profile about the periphery of each face 68, 69.

During the operation of the engine 10, pressurized cooling air 40 is pumped into the inner cavity 50 by a duct 70, where a major portion of the cooling air 40 is dedicated to internally cooling the blades 58. The cooling air 40 enters the blades 58 via a series of radially extending conduits 72 communicating with a plenum 74 flanked by the blade attachment 66 and the disk 56. The cooling air 40 exits the blade 58 via a series of film holes 76. To ensure a continuous flow of cooling air 40 through the blades 58, the pressure of the cooling air 40 must remain greater than the pressure of the combustion gases 24 or the combustion gases 24 may backflow into the film holes 76, potentially affecting the durability of the blades 58.

An exemplary seal 80 in accordance with an embodiment of the invention separates the inner cavity 50 from the annular duct 30, thus ensuring adequate cooling air 40 pressure throughout all engine-operating conditions. The seal 80 is located radially inward of the annular duct 30, defining an outer cavity 82 therebetween. Since the outer cavity 82 is relatively small, any leakage of cooling air 40 through the seal 80 is subject to relatively minimal centrifugal pumping by the rotor assembly 54, prior to mixing with the combustion gases 24. This level of centrifugal pumping has limited negative impact on disk 56 temperature and aerodynamic drag, thus improving engine efficiency.

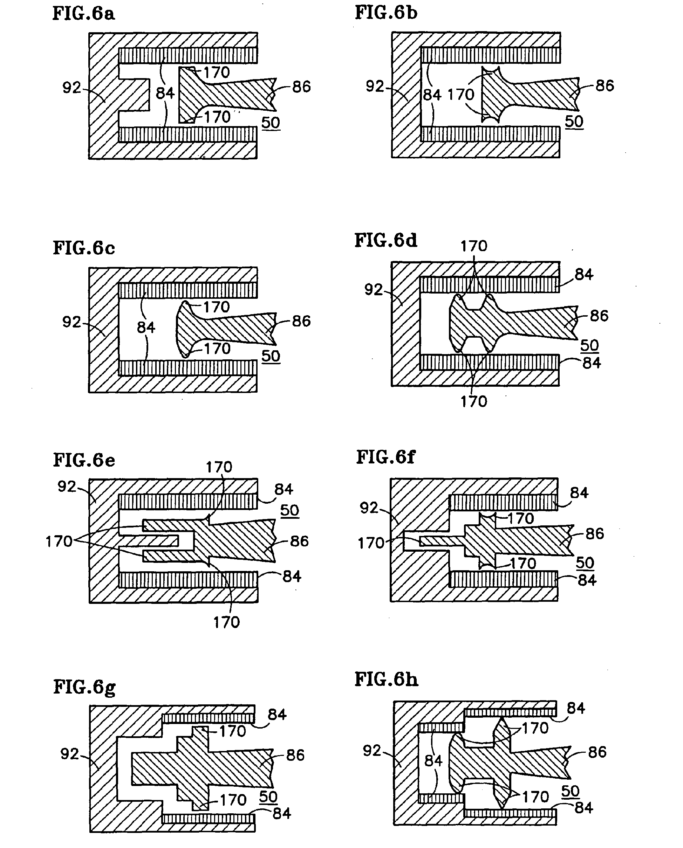

The exemplary seal 80 of FIGS. 2 and 3, comprises a circumferentially disposed land 84 defined by the vane support 52 and a segmented ring 86 defined by the rotor assembly 54. In the examples shown, the lands 84 have a linear cross sectional profile; however, other profiles such as those shown in the examples of FIGS. 6a-6h may also be used. Lands 84 at differing radial locations provide an increased restriction over a single land 84. A land 84 may be integrally defined by the vane support 52 or may be defined by a separate arm 92 and affixed to the vane support 52 by welding, bolting, riveting or other suitable means. A land 84 is generally affixed to a face 94 of the vane support 52 or arm 92 by brazing and is comprised of honeycomb, or any other abradable structure known in the sealing art. The number of rings 86 and lands 84 depends on the leakage restriction requirements and installation area available.

The segmented ring 86 is radially located in an interrupted rim region 110 of the disk 58. The interrupted rim region 110 extends radially outward from a radius 112 circumscribing a floor 114 of each slot 62 to the outer rim 60. As best shown in FIGS. 4 and 5, a first number 164 of the ring segments are defined by the disk lugs 64 and a second number 166 of the ring segments are defined by the blade attachments 66. The first number of segments 164 are preferably formed with the disk 56 prior to milling or broaching the slots 62. The second number of segments 166 are preferably cast or forged integrally with the blades 58 and machined with the attachment 66. With the blades 58 interposed with the lugs 64, the first 164 and second 166 ring segments substantially align, defining a complete segmented ring 86.

A runner 170, also known as a knife-edge, extends outward from a segmented ring 86 as shown in FIGS. 2 and 3. The addition of multiple runners 170 provides for a greater cooling air 40 leakage restriction, but the actual number may be limited by the available area and weight restrictions. The width of a runner 170 should be as thin as possible adjacent to a land 84 to reduce the velocity of any cooling air 40 flowing therebetween. Since intermittent contact between a runner 170 and a land 84 may occur, a coating, hardface or other wear-resistant treatment is typically applied to the runner 170. A runner 170 may also be canted in the direction opposing the cooling air 40 flow, as shown in FIGS. 2 and 3, from between about 22.5 degrees to about 68 degrees, preferably 55 degrees, relative to the engine axis 11. By canting a runner 170 in the direction opposing the cooling air 40 flow, a damming effect is created, providing for an increased leakage restriction. Canting a runner 170 also reduces the length of the thicker, segmented ring 86, reducing weight even further. Several examples of a runner 170 are shown in FIGS. 6a-6h.

Referring now to FIG. 5, tangential sealing between adjacent ring segments 164, 166 occurs as centrifugal forces draw the blade 58 radially outward against the lugs 64 during the engine 10 operation. To achieve this sealing, the segmented ring 86 is radially positioned to include a contact surface 168 located at the interface of the lug 64 and the attachments 66. Although a innermost contact surface 168 is included in the example for reduced weight, any one or more of the contact surfaces 168 may be included.

With the rotor assembly 54 installed in the high pressure turbine 18 as shown in FIGS. 2 and 3, a segmented ring 86 extends outward from the interrupted rim region of the rotor assembly 54, spans across the inner cavity 50, aligning a runner 170 with a land 84. Sufficient radial clearance between a runner 170 and a land 84 prevents interference during assembly and during engine 10 operation.

Although an exemplary seal 80 is shown positioned between a stationary member and a rotating member, it is to be understood that an exemplary seal 80 may also be located between two rotating members or two stationary members as well.

While the present invention has been described in the context of specific embodiments thereof, other alternatives, modifications and variations will become apparent to those skilled in the art having read the foregoing description. Accordingly, it is intended to embrace those alternatives, modifications and variations as fall within the broad scope of the appended claims.

## Claims

1. A seal assembly (80) for restricting leakage of a fluid from a cavity (50) for storing a pressurized fluid (40) in a gas turbine engine, comprising:
a rotor assembly (54), said rotor assembly (54) including a disk (56) rotationally disposed about a central axis (11) of the engine, said disk (56) including a radially outermost rim (60), a plurality of slots (62) extending through an axial thickness of the disk (56) and circumferentially spaced about the rim (60), a plurality of lugs (64) interspersed with the slots (62) and wherein each of the lugs (64) includes a profile, an interrupted rim region (110) extending radially outward from a radius (112) circumscribing a radially innermost floor (114) of the slots (62) to the rim (60), and a plurality of blades (58) interposed with the lugs (64), each of said blades (54) including an attachment (66) with a complementary profile for engaging adjacent lugs (64);
a support (52) spaced axially from said rotor assembly (54) such that said support (52) and said rotor assembly (54) flank the cavity (50), said support (52) comprising at least one land (84) adjacent to the cavity (50) and radially proximate the interrupted rim region (110); and
wherein said rotor assembly (54) further comprises at least one segmented ring (86) protruding from the interrupted rim region (110), said segmented ring (86) spanning across the cavity (50) and cooperating with the at least one land (84) to define the seal.

2. The seal of claim 1, wherein a first number (164) of ring segments are defined by the disk lugs (64) and a second number (166) of ring segments are defined by the blade attachments (66) such that when the blades (58) are interposed with the lugs (64), the first and second ring segments (164, 166)substantially align, defining the at least one segmented ring (86).

3. The seal of claim 2, wherein the first number (164) of ring segments alternate with the second number (166) of ring segments about the circumference of the at least one segmented ring (86).

4. The seal of claim 3, wherein the at least one segmented ring (86) includes at least one runner (170) extending therefrom, the at least one runner (170) cooperating with the at least one land (84) to define the seal.

5. The seal of claim 4, wherein at least one runner (170) is canted at an angle of between about 22.5 degrees and about 68 degrees relative to a central axis (11) of the engine.

6. The seal of claim 5, wherein at least one runner (170) is canted at an angle of about 55 degrees relative to the axis (11).

7. The seal of claim 4, 5 or 6, further comprising at least one contact surface (168) on each of the attachments (66) and the lugs (64), the at least one contact surface (168) being located at the interface of the attachments (66) and the lugs (64) during engine operation.

8. The seal of claim 7, wherein at least one ring segment (164, 166) includes at least one contact surface (168).

9. The seal of claim 8, wherein each ring segment (164, 166) includes two contact surfaces (168).

10. The seal of claim 9, wherein each ring segment (164, 166) includes two of the radially innermost contact surfaces (168).

11. The seal of any preceding claim, wherein said support (52) further includes an arm (92) and wherein the at least one land (84) is defined by the arm (92).

12. The seal of any preceding claim, wherein the at least one land (84) is comprised of a honeycomb structure.

13. A rotor assembly (54) comprising:
a disk (56) rotationally disposed about a central, longitudinal axis (11), said disk (56) including a radially outermost rim (60), a plurality of slots (62) extending through an axial thickness of the disk (56) and circumferentially spaced about the rim (60), a plurality of lugs (64) interspersed with the slots (62) and wherein each of the lugs (64) has a profile, and an interrupted rim (110) region extending radially outward from a radius (112) circumscribing a floor (114) of the slots (62) to the rim (60);
a plurality of blades (58) interposed with the lugs (64), each of said blades (58) including an attachment (66) with a complementary profile for engaging adjacent lugs (64); and
at least one segmented ring (86) protruding outward from the interrupted rim region (110).

14. The rotor assembly of claim 13, wherein a first number (164) of ring segments are defined by the lugs (64) and a second number (166) of ring segments are defined by the blade attachments (66) such that when the blades (58) are interposed with the lugs (64), the first and second ring segments (164, 166) substantially align, defining the at least one segmented ring (86).

15. The rotor assembly of claim 14, wherein the first ring segments (164) alternate with the second ring segments (166) about the circumference of the at least one segmented ring (86).

16. The rotor assembly of claim 15, wherein each ring segment (164, 166) includes at least one runner (170) extending therefrom.

17. The seal of claim 16, wherein the at least one runner (170) is canted at an angle of between about 22.5 degrees and about 68 degrees relative to a central axis (11) of the rotor assembly (54).

18. The seal of claim 17, wherein the at least one runner (170) is canted at an angle of about 55 degrees relative to the axis (11).

19. The rotor assembly of claim 16, 17 or 18 further comprising at least one contact surface (168) on each of the attachments (66) and the lugs, the at least one contact surface (168) being located at the interface of the attachments (66) and the lugs (64) during engine operation.

20. The assembly of claim 19, wherein at least one ring segment (164, 166) includes at least one contact surface (168).

21. The assembly of claim 20, wherein each ring segment (164, 166) includes two contact surfaces (168).

22. The assembly of claim 21, wherein each ring segment (164, 166) includes two of the radially innermost contact surfaces (168).

23. A blade (58) for a rotor assembly (54) of a gas turbine engine comprising:
an attachment (66) for engaging the rotor, said attachment (66) including a forward face (68), a rearward face (69) spaced axially apart from the forward face (68), a number of teeth (67) protruding outward from the attachment (66) and extending lengthwise between the faces (68, 69), the teeth (67) separated from one another radially and projecting a fir tree profile about a periphery of each face (68, 69); and at least one ring segment (166) protruding outward from a face (68, 69).

24. The blade of claim 23, wherein the at least one ring segment (166) includes at least one runner (170) extending therefrom.

25. The blade of claim 24, wherein the at least one runner (170) is canted at an angle of between about 22.5 degrees and about 68 degrees relative to a central axis of the engine.

26. The blade of claim 25, wherein the at least one runner (170) is canted at an angle of about 55 degrees relative to the axis.

27. The blade of claim 24, wherein at least one of the teeth (67) includes a contact surface (168) along its length, the contact surface (168) being located at the interface of the attachment (66) and the rotor assembly (54) during engine operation; and wherein at least one of the ring segments (166) is radially located at a contact surface location.

28. The rotor blade of claim 27, wherein at least one of the contact surfaces (168) extends beyond a face (68, 69) and into the at least one ring segment (166), allowing the at least one ring segment (166) to interface with the rotor assembly (54) during engine operation.

29. An interstage cavity seal comprising:
a rotor stage (54) including a rim (60) and a plurality of blades (58) extending radially outward therefrom;
a vane support (52) comprising at least one land (84), said support (52) being spaced from said rotor stage (54) to define a cavity (50) therebetween; and
at least one ring (86) extending outward from said rotor stage (54), radially inward of the rim (60), said ring (86) spanning across the cavity (50) and cooperating with the at least one land (84) to define the seal.

30. The interstage seal of claim 29, wherein said ring (86) is segmented.
